Europäisches Patentamt

European Patent Office

Office européen des brevets

(19)

(11) Numéro de publication : **0 223 725 B2**

(12) **NOUVEAU FASCICULE DE BREVET EUROPEEN**

(45) Date de publication du nouveau fascicule du brevet : **19.11.92 Bulletin 92/47**

(51) Int. Cl.⁵ : **E06C 9/04, F16B 13/00**

(21) Numéro de dépôt : **86440084.1**

(22) Date de dépôt : **02.10.86**

(54) **Echelon de scellement et son procédé de fixation.**

(30) Priorité : **23.10.85 FR 8515937**

(43) Date de publication de la demande :
**27.05.87 Bulletin 87/22**

(45) Mention de la délivrance du brevet :
**28.12.88 Bulletin 88/52**

(45) Mention de la décision concernant
l'opposition :
**19.11.92 Bulletin 92/47**

(84) Etats contractants désignés :
**AT BE CH DE ES GR IT LI LU NL SE**

(56) Documents cités :
**CH-A- 505 276**
**DE-A- 2 254 550**
**DE-C- 3 322 985**
**FR-A- 2 440 461**

(73) Titulaire : **M.S.U. MATERIEL DE SECURITE URBAIN Société à responsabilité limitée dite:
Route d'Ensisheim
F-68840 Pulversheim (FR)**

(72) Inventeur : **Bergdoll, Marcel
1, rue des Mineurs
F-68840 Pulversheim (FR)**

(74) Mandataire : **Aubertin, François
Cabinet Lepage & Aubertin Innovations et
Prestations 4, rue de Haguenau
F-67000 Strasbourg (FR)**

EP 0 223 725 B2

# Description

L'invention concerne un échelon tubulaire destiné à être ancré dans la paroi d'un ouvrage en béton, et constitué d'un élément tubulaire recourbé en forme de "U", notamment métallique, et de deux douilles de fixation assujetties aux extrémités de l'élément tubulaire.

L'invention concerne également le procédé de fixation dudit échelon de scellement dans la paroi d'un ouvrage en béton.

On connaît déjà dans l'état antérieur de la technique, des échelons prévus pour une utilisation analogue, et comportant généralement un élément tubulaire présentant sensiblement la forme d'un "U", dont l'extrémité des branches est destinée à être positionnée dans la paroi d'un ouvrage de maçonnerie par l'intermédiaire du douilles en matière plastique.

Ainsi, l'on connaît par le document FR-A-2 071 601 et DE-A-2,254,550, un échelon constitué d'un tube en acier muni d'un revêtement en matière plastique ou en aluminium pour éviter la corrosion, ce tube d'acier étant mis en place dans une maçonnerie ou une paroi en béton au moyen d'éléments de fixation rapportés constitués en l'espèce, de douilles en matière plastique pourvues extérieurement de nervures annulaires.

On connaît également du document DE-C -3 322 985 un échelon du même type que les précédents, la douille étant assujettie à l'élément tubulaire lors du moulage sur celui-ci.

La fixation de ce type d'échelon conformément au document précité consiste en l'introduction des douilles de fixation dans des perçages correspondants aménagés préalablement dans la maçonnerie, puis en l'introduction forcée des extrémités de l'élément tubulaire de l'échelon dans les douilles de fixation déjà positionnées.

L'échelon tubulaire et son mode de fixation conformes à ce document comportent plusieurs inconvénients.

En effet, avant de pouvoir positionner l'élément tubulaire dans les douilles de fixation, il est nécessaire d'aménager pour ces dernières des trous adéquats percés dans le béton dur et sec des ouvrages à équiper. Ceci est rendu partiulièrement délicat par la nécessité d'ob tenir des trous d'un diamètre précis et constant, faute de quoi la qualité de l'ancrage de l'échelon sera essentiellement variable.

En outre, la mise en place de l'échelon tel que décrit nécessite l'utilisation de moyens importants pour l'enfoncement des extrémités du corps tubulaire recourbé dans les douilles.

Enfin, la résistance à l'extraction de ce type d'échelon par rapport aux douilles de liaison ne peut pas être supérieure à la force qui a été mise en oeuvre lors de l'enfoncement dudit échelon dans les douilles. En réalité, force est de constater qui bien souvent, il est possible d'arracher l'élément tubulaire moyennant des efforts de traction bien inférieurs à ceux imposés par la norme, à savoir 360 kg. Il en résulte un usage risqué, voire dangereux de certains échelons mis en place selon les enseignements de ce brevet.

On connaît, par ailleurs, par le document FR-A-2 440 461, un échelon de sécurité également constitué d'un élément tubulaire recourbé en forme de "U" et dont les extrémités portent des douilles en matière plastique destinées à être positionnées dans la paroi d'un mur en béton.

Dans ce cas, les douilles de fixation possèdent une partie terminale de forme conique, ce qui permet éventuellement le positionnement desdites douilles dans le béton encore frais d'une paroi en cours de moulage.

Cependant, la liaison entre les extrémités de l'élément tubulaire et les douilles de fixation est également constituée par un simple serrage, avec les risques que cela comporte pour la tenue de l'ensemble. Ce risque est d'ailleurs renforcé par le fait que, les douilles de fixation étant en matière plastique et l'élément tubulaire étant métallique, les coefficients de dilatation respectifs sont différents, ce qui, par conséquent, influe considérablement sur les forces de serrage exercées sur l'élément tubulaire métallique, et par conséquent sur la tenue de celui-ci.

En outre, il a été considéré que la résistance à l'arrachage de l'élément tubulaire recourbé pourrait être améliorée en procédant à un collage des extrémités de celui-ci dans les douilles de fixation. Cependant, un tel procédé nécessite l'utilisation d'une colle spéciale de mise en oeuvre délicate, et le résultat en est un coût de fabrication et d'utilisation de l'échelon prohibitif.

Par ailleurs, des essais ont montré que cette solution permettait à peine d'obtenir une résistance à l'arrachage de 360 à 380 kg, c'est-à-dire que la valeur exigée par la norme est dans ce cas simplement atteinte, mais sans aucun coefficient de sécurité.

La présente invention a pour but de remédier à ces inconvénients. L'invention, telle qu'elle est caractérisé dans les revendications, résout le problème consistant à créer un échelon tubulaire tel que décrit dans la revendication 1.

Les avantages obtenus grâce à cette invention consistent essentiellement en ce que le métal repoussé des extrémités de l'élément recourbé s'incruste littéralement dans la paroi interne de chaque douille de fixation lorsque l'usager gravit une paroi verticale pourvue de ces échelons et s'agrippe à l'échelon supérieur pour se hisser en exerçant sur ce dernier une traction. Selon des essais effectués, la résistance à l'arrachage peut atteindre 600 kg, voire 700 kg. Ainsi, l'échelon présente une valeur à la résistance d'arrachage nettement supérieure à celle des échelons connus de l'état de la technique antérieure.

L'invention est exposée ci-après plus en détail à

l'aide de dessins représentant seulement un mode d'exécution.

La figure 1 représente, en vue en plan, l'échelon selon l'invention celui-ci étant scellé dans une paroi en béton.

La figure 2 représente, en vue en élévation et en coupe, l'une des extrémités de l'échelon, positionnée dans une douille de fixation.

La figure 3 représente une vue de détail de la partie "A" schématisée dans la figure 2.

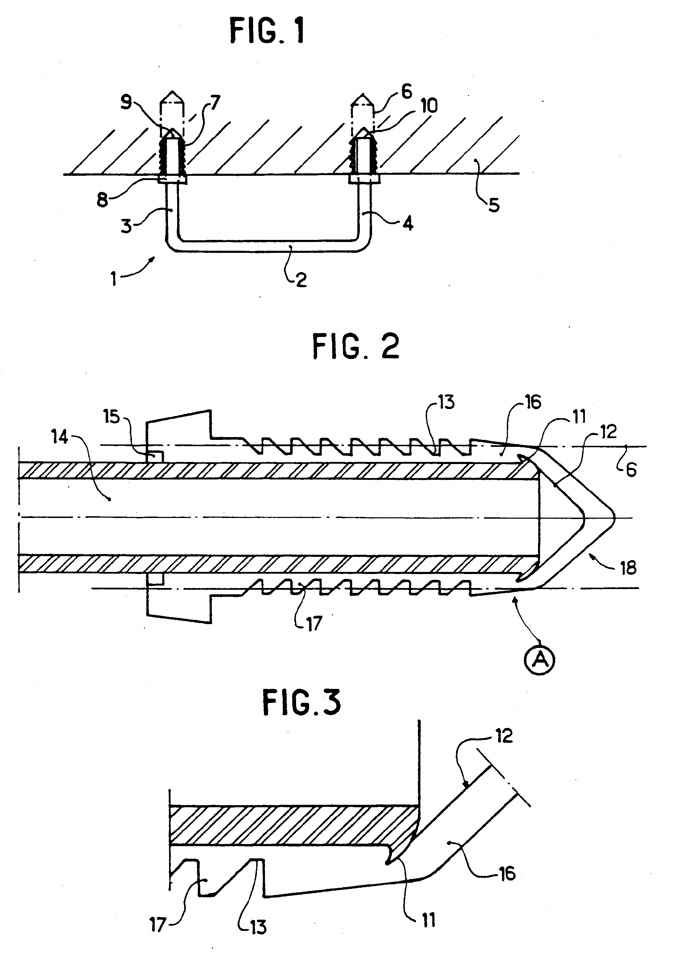

On se réfère à la figure 1.

L'échelon de scellement 1 selon l'invention se compose, de façon connue, d'un élément tubulaire 2 recourbé en forme de "U" dont les deux branches 3 et 4 sont destinées à être ancrées dans une paroi en béton 5. Cet ancrage se fait soit dans le béton dur et sec d'un ouvrage déjà existant, soit dans le béton frais d'une paroi en béton en cours de moulage.

Dans le premier cas, des orifices 6 convenablement espacés sont percés dans la paroi 5. Puis, l'on positionne dans ces orifices 6 des douilles de fixation 7 que l'on enfonce simplement dans les orifices 6 jusqu'à ce qu'un épaulement périphérique 8 des douilles de fixation 7 vienne arrêter la progression de celles-ci dans les orifices 6.

Dans le second cas, les douilles 7 sont préalablement engagées sur les extrémités 9 et 10 des branches 3 et 4 de l'élément tubulaire 2, puis l'ensemble est introduit dans la paroi de béton 5 en cours de moulage, tel que représenté sur la figure 1.

On se réfère aux figures 2 et 3.

Il est évident que, pour faciliter la mise en place de l'échelon de scellement selon l'invention, puis pour assurer sa tenue face aux sollicitations et dans le temps, il est nécessaire de prévoir des moyens destinés, d'une part, à faciliter la pose de l'échelon, et, d'autre part, des moyens destinés à lui conférer un ancrage extrêmement fiable et ne cédant que sous l'application de très fortes contraintes.

A cet effet, l'élément tubulaire 2 possède au niveau de ses extrémités 9 et 10, des moyens d'ancrage par rapport aux douilles de fixation 7.

Selon un mode de réalisation représenté sur la figure 2, ces moyens d'ancrage sont constitués par un bourrelet périphérique 11 aménagé au voisinage des extrémités 9 et 10 de l'élément tubulaire 2, et coopérant avec la paroi interne 12 de chaque douille de fixation 7. Ce bourrelet périphérique 11 est obtenu par le repoussage desdites extrémités.

La douille de fixation 7 pouvant notamment être en matière plastique, le bourrelet périphérique 11 aura la forme d'un redan périphérique, en relief par rapport à la paroi externe 13 de l'élément tubulaire 2, et orienté en retrait par rapport aux extrémités 9 et 10 des branches 3 et 4 dudit élément tubulaire 2.

Par ailleurs, chacune des douilles de fixaion 7 possède au niveau de son orifice 14, un dégagement périphérique de guidage 15.

Ainsi, lors de l'introduction des extrémités 9 et 10 des branches 3 et 4 du corps tubulaire 2 dans les douilles de fixation 7, ces extrémités 9 et 10 pourvues de leur redan périphérique seront positionnées en regard des dégagements de guidage 15. Puis, il suffira d'exercer une pression sur l'élément tubulaire 2 de façon à ce que les extrémités 9 et 10 pénètrent dans les douilles de liaison 7 en en déformant élastiquement les parois 16 éventuellement pourvues de cannelures périphériques 17 telles que connues en soi. Puis, les extrémités 9 et 10 viennent en butée avec la partie conique 18 des douilles de fixation 7. Dans cette position, il est bien évident que la configuration choisie pour le bourrelet périphérique 11 fera que toute tentative d'extraction de l'élément tubulaire 2 se soldera par l'incrustation dudit bourrelet périphérique 11 dans la paroi 16 des douilles de fixation 7, et il en résultera un ancrage d'autant plus efficace de l'échelon.

Il est à noter à ce sujet, que le dimensionnement de l'épaisseur de la paroi 16 des douilles de fixation 7 en matière plastique, ainsi que la hauteur du relief présenté par le bourrelet périphérique 11 par rapport à la paroi externe 13 de l'élément tubulaire 2, sont fonction des dimensions de l'échelon.

L'échelon de scellement ainsi que son procédé de fixation tels que décrits précédemment, ont l'avantage de procurer un ancrage très fiable dudit échelon, et ceci même dans le cas d'une fixation sur béton sec.

Par ailleurs, dans le cas d'une fixation de l'échelon sur une paroi de béton en cours de moulage, cette fixation n'en est que facilitée puisqu'il suffit d'enfoncer les extrémités 9 et 10 de l'échelon pourvues de leurs douilles de fixation 7 dans le béton mou, et ceci jusqu'au niveau de l'épaulement 8 desdites douilles.

Des essais d'arrachage réalisés avec l'échelon de scellement tel que décrit précédemment ont montré qu'un effort de l'ordre de 700 kg était nécessaire pour obtenir l'arrachage de l'échelon, ce qui représente une valeur nettement supérieure au minimum imposé par les normes.

En outre, la possibilité de procéder à l'enfoncement direct des échelons dans du béton mou permet d'éviter tous les problèmes d'étanchéité ou de fissuration des murs ainsi équipés, puisque le béton frais s'immiscera aisément entre les différentes cannelures 17 des douilles de fixation 7, et par suite l'échelon de scellement fera parfaitement corps avec la paroi.

## Revendications

1. Echelon tubulaire destiné à être ancré dans la paroi d'un ouvrage en béton, et constitué d'un élément tubulaire (2) recourbé en forme de "U", notamment métallique, et de deux douilles de fixation (7) assujetties aux extrémités (9, 10) de l'élément tubulaire (2), échelon caractérisé par le fait que l'élément tubulaire (2) recourbé en forme de

"U" possède à ses extrémités (9, 10) un seul bourrelet périphérique (11) en forme de redan obtenu par repoussage desdites extrémités (9, 10), ledit bourrelet coopérant avec la paroi interne (12) de chaque douille de fixation (7), et que ledit redan périphérique est aménagé en relief par rapport à la paroi externe (13) de l'élément tubulaire (2), et orienté en retrait par rapport aux extrémités (9, 10) des branches (3, 4) dudit élément tubulaire (2).

2. Echelon selon la revendication 1, caractérisé par le fait que les douilles (7) possèdent au niveau de leur orifice (14) un dégagement de guidage périphérique (15).

**Patentansprüche**

1. Rohrförmiges Steigelement zum Einmauern in die Wand eines Betonwerks und bestehend aus einem, nämlich metallischen, "U"-förmig gebogenen rohrförmigen Element (2) und zwei an den Enden (9, 10) des rohrförmigen Elements (2) befestigten Befestigungsdübeln (7), Steigelement dadurch gekennzeichnet, daß das "U"-förmig gebogene rohrförmige Element (2) an dessen Enden (9, 10) einen einzigen stufenförmigen Umkreiswulst (11) aufweist, der durch Bossieren der genannten Enden (9, 10) erhalten wird, wobei der genannte Wulst mit der Innenwand (12) jedes Befestigungsdübels (7) zusammenwirkt, und daß die genannte Umkreisstufe bezüglich der Außenwand (13) des rohrförmigen Elements (2) hervorstehend und bezüglich der Enden (9, 10) der Schenkel (3, 4) des genannten rohrförmigen Elements (2) rückgesetzt vorgesehen ist.

2. Steigelement nach Anspruch 1, dadurch gekennzeichnet, daß die Dübel (7) im Bereich deren Loch (14) einen Umkreisführungsfreiraum (15) aufweisen.

**Claims**

1. Tubular step iron for being anchored into the wall of a concrete work and comprised of a, viz. metallic, tubular element (2) bent into a "U"-shape and two fixing plugs (7) fastened to the ends (9, 10) of the tubular element (2), step iron characterized in that the tubular element (2) bent into a "U"-shape has, at its ends (9, 10) one single peripheral step-shaped rim (11) obtained by embossing said ends (9, 10), said rim co-operating with the inner wall (12) of each fixing plug (7), and that said peripheral step is provided raised up with respect to the outer wall (13) of the tubular element (2) and set back with respect to the ends (9, 10) of the legs (3, 4) of said tubular element (2).

2. Step iron according to claim 1, characterized in that the plugs (7) have, at the level of their hole (14), a peripheral guiding clearance (15).

# FIG. 1

# FIG. 2

# FIG.3